# EUROPÄISCHE PATENTSCHRIFT

(11) **EP 0 947 239 B1**
(45) Veröffentlichungstag und Bekanntmachung des Hinweises auf die Patenterteilung: **08.06.2005**
(21) Anmeldenummer: 99105282.0
(22) Anmeldetag: 15.03.1999
(51) Int. Cl.: B01F 5/06

(54) **Statischer Mischer**
Static mixer
Mélangeur statique

(30) Priorität: 27.03.1998 DE 19813600
(43) Veröffentlichungstag der Anmeldung: 06.10.1999
(73) Patentinhaber: Bayer Technology Services GmbH, 51368 Leverkusen (DE)
(72) Erfinder: Jähn, Peter, 51375 Leverkusen (DE); Brod, Helmut Dr., 51061 Köln (DE); Kohlgrüber, Klemens Dr., 51515 Kürten (DE)

(56) Entgegenhaltungen:
- EP-A- 0 070 915
- EP-A- 0 226 788
- EP-A- 0 489 211
- EP-A- 0 530 510
- US-A- 4 408 892
- US-A- 4 708 852
- US-A- 4 848 920
- US-A- 5 171 544
- US-A- 5 616 289

## Beschreibung

Die Erfindung betrifft ein scheibenförmiges statisches Mischermodul mit einer Vielzahl von Öffnungen, das auf Vorder- und Rückseite durch Kanäle strukturiert ist, wobei die Öffnungen in den Flanken der Kanäle auf Vorder- und Rückseite enden. Die Erfindung betrifft ferner einen Mischer, der wenigstens zwei hintereinander angeordnete statische Mischermodule enthält, wobei mindestens eines ein vorstehend beschriebenes scheibenförmiges statisches Mischermodul ist. Das Mischermodul und der Mischer werden in durchströmten Rohrleitungen und Gehäusen eingesetzt.

Die Vorderseite des Mischermoduls oder des Mischers ist die der Strömung entgegengerichtete Seite

Gängige statische Mischer sind von M.H. Pahl und E. Muschelknautz in "Einsatz und Auslegung statischer Mischer", Chem.-In.-Tech. 51, Nr. 5, S. 347 - 364 (1979) von Pahl und Muschelknautz in Statische Mischer und ihre Anwendung, Chem.-Ing.-Tech. 52, Nr. 4, S. 285-291; (1980) beschrieben.

Es wird zwischen Wendelmischern und anderen Mischern unterschieden. Der älteste und oft eingesetzte Wendelmischer ist der Kenics-Mischer. Mit Wendelmischern wird der Produktstrom in zwei bis vier Teilströme aufgeteilt. Diese Teilströme werden durch Wendel im Rohr geführt. Die Kanten aufeinander folgender Einzelwendel sind gegeneinander verdreht, so daß es mit jedem weiteren Wendel zu einer neuen Aufteilung des Produktstroms kommt. Die Mischung mit Hilfe von Wendelmischern ist sehr ineffektiv, da sehr lange Mischstrecken benötigt werden.

Ein Statikmischer mit sich kreuzenden Stegen und Platten ist in der DT 23 28 795 beschrieben. Dieser Statikmischer besteht aus mehreren sich kreuzenden, mit Stegen und Schlitzen kammartig ineinander greifenden Scheiben, die zur Achse des Gehäuses, zum Beispiel einem von Mischgut (Produkt) durchströmten Rohr oder Kanal geneigt, montiert sind. Die Scheiben teilen den Produktstrom in eine der Stegzahl entsprechene Anzahl von Teilströmen auf. Um eine gutes Mischergebnis zu erzielen, werden mehrere solcher Statikmischer hintereinander angeordnet und dabei aufeinander folgende Statikmischer um einen festen Winkel gegeneinander verdreht.

Die bekannten Kreuz-Steg-Mischer weisen die folgenden Nachteile hinsichtlich ihrer Mischwirkung auf: Beim Durchströmen des Kreuz-Steg-Mischers bilden sich im Produktstrom, in Strömungsrichtung gesehen, Teilströme entlang der Stege. Diese Teilströme können über eine Strecke, die größer als der Durchmesser des den Mischer umgebenden Gehäuses ist, nahezu ungehindert und ohne Durchmischung mit anderen Teilströmen fließen. Diese über lange Strecken ungehindert fließenden Teilströme werden "bevorzugte Strömungskanäle" genannt.

Die "bevorzugten Strömungskanäle" verhindern ein schnelles und gutes Einmischen einer zusätzlichen Komponente in einen Produktstrom, insbesondere wenn es sich um hochviskose Flüssigkeiten handelt. Nur durch einen vorgegebenen, exakten Winkelversatz von aufeinanderfolgenden Statikmischern werden die "bevorzugten Strömungskanäle" beim Übergang zum nächsten Statikmischer blockiert und zusätzliche Komponenten besser eingemischt.

Die Anforderungen an einen Statikmischer, der im industriellen Maßstab eingesetzt werden soll, gehen über ein gutes Mischergebnis bei kurzer Mischstrecke hinaus: Zusätzlich wird ein niedriger Herstellungsaufwand, eine einfache Montage und einfache Demontage im Reparaturfall, geringe Störanfälligkeit und schonende Behandlung des Mischguts durch kurze Verweilzeit im Mischer gefordert, um eine gute Produktqualität zu erhalten.

Auf Grund der ungenügenden Mischwirkung der einzelnen Statikmischer sind eine Vielzahl von einzelnen Mischerelementen einzusetzen. Hierdurch wird die Mischstrecke vergleichsweise lang. Um die Stege der einzelnen kammartig ineinandergreifenden Bleche dieses Mischers zueinander genau und unverrückbar zu fixieren, müssen diese an den Kreuzungspunkten durch Schweißen verbunden werden. Bei großen Durchmessern nimmt die Anzahl der zu schweißenden Stellen so stark zu, daß Wirtschaftlichkeitsgründe gegen die Verwendung solcher Mischer sprechen. Dies kann bei hohen Druckgradienten zu irreparablen Verformungen der Stege führen. Ein aus diesen oder anderen Gründen verformtes Mischerelement bildet im Betrieb einen Strömungswiderstand, der so hoch sein kann, daß ein Verstopfen des Mischrohres und eine weitere Zerstörung des Mischerelementes eintritt. Die Mischerelemente müssen bei Verformung der kammartigen Platten ausgebaut, gereinigt, repariert und wieder eingebaut werden. Oft führt der komplizierte Ausbau aus dem Mischrohr zu weiteren Deformationen an den Elemente, so daß sie komplett ersetzt werden müssen.

Die lange Mischstrecke bedingt unter Umständen einen hohen Druckverlust und eine lange Verweilzeit der strömenden Flüssigkeit im statischen Mischer. Eine lange Verweilzeit kann sich nachteilig auf die Qualität der Produkte auswirken. Es kann zu Verkrustungen und Schädigung des Produkts innerhalb des Mischers kommen.

Bei Änderung der verfahrenstechnischen Auslegung z.B. der Vergrößerung des Gehäuse- oder Rohrdurchmessers wegen eines angestiegenen Produktvolumenstroms müssen auch die Mischerelemente neu ausgelegt werden. Eine einfache proportionale Vergrößerung des Mischers mit gleichbleibender Teilungszahl des Hauptstroms führt zu einer zwangsläufigen Vergrößerung der einzelnen Strömungskanäle und damit zu einem schlechteren Mischergebnis, insbesondere wenn der einzumischende Produktstrom sehr viel kleiner ist als der Hauptstrom. Das heißt, die Mischerlänge muß in diesem Fall überproportional steigen, um ein gleichbleibendes Mischergebnis zu erzielen. Werden die Proportionen geändert, muß die Mischstrecke mit großem Aufwand bezüglich ihrer Mischwirkung und Stabilität neu ausgelegt werden.

In DE 28 22 096 werden gebohrte Stangenmischer offenbart, die aus einem zylindrischen Block, dessen Länge größer als sein Durchmesser ist, bestehen. In diesen Block sind eine Vielzahl von durchgehenden, parallelen Kanälen gebohrt, die sich unter einem Winkel zur Hauptströmungsrichtung gegenseitig schneiden. Der gebohrte Stangenmischer hält einem hohen Druckgradient stand. Nachteilig ist, daß die Fertigung des gebohrten Stangenmischers sehr aufwendig und die Auslegung des Mischers nicht variabel ist. So läßt sich z.B. der Durchmesser der Kanäle nicht beliebig verkleinern, da Bohrer mit zu kleinem Durchmesser bei der Herstellung der Kanäle die vorgegebene Richtung nicht halten können, sondern beim Bohren verlaufen. Die gebohrten Mischer können daher verfahrenstechnischen Anforderungen nicht frei angepaßt werden. Es können nur in engen Grenzen der Abmessungen Stangenmischer gefertigt werden.

Wie bei den bekannten Statikmischern, bilden sich auch beim gebohrten Stangenmischer "bevorzugte Strömungskanäle", die eine gute Mischwirkung verhindern. Mehrere hintereinander positionierte gebohrte Stangenmischer müssen in einem definierten Winkel gegeneinander verdreht angeordnet werden, um eine annehmbare Mischwirkung zu erreichen, was die Montage erschwert.

Eine einfachere Montage und eine höhere Mischwirkung, insbesondere bei hochviskosen Stoffen, versucht man mit dem aus EP 0 195 450 bekannten Komax-Mischer zu erreichen. Der Komax-Mischer besteht aus mehreren zylindrischen Scheiben mit mehreren gleichgroßen Bohrungen parallel zur Zylinderachse. Die Scheiben werden so versetzt hintereinander angeordnet, daß die Bohrungen sich in Strömungsrichtung jeweils teilweise überdecken. Dadurch bilden sich im montierten Zustand Hohlräume. Die radiale Durchmischung ist damit gegenüber dem gebohrten Stangenmischer und den Mischern aus DT 2 328 795 verbessert, da sich keine "bevorzugten Strömungskanäle" ausbilden können. Allerdings ist auch die Verweilzeit wegen der nicht gut durchströmten Hohlräume vergrößert.

In CZ 1707 U (PUV 1428-93) werden ebenfalls statische Mischer offenbart, welche den erfidnungsgemäßen Mischern ähneln, jedoch keinerlei Segmentierung aufweisen, was zu erheblichen Problemen bei der Konstruktion räumlich kleiner Einheiten mit großen Durchsätzen führt.

Die Aufgabe der Erfindung ist es, die Nachteile der bekannten statischen Mischer wesentlich zu reduzieren bzw. zu eliminieren. Dazu gehört insbesondere die Erzielung eines vergleichbaren oder besseren Mischergebnisses in einer kürzeren Mischstrecke, die Erniedrigung der Verweilzeit des Mischgutes, die Erhöhung der Stabilität gegen hohe Druckgradienten, die Verbesserung der Montagefreundlichkeit sowie eine Verringerung des Herstellungsaufwandes.

Diese Aufgabe wird gelöst durch ein scheibenförmiges statisches Mischermodul, mit einer Vielzahl von Öffnungen, das auf seiner Vorder- und Rückseite durch Kanäle strukturiert ist, wobei die Öffnungen in den Flanken der Kanäle auf der Vorder- und Rückseite enden. Die Kanäle auf der Vorderseite des Moduls werden im folgenden als Eintrittskanäle, die Kanäle auf der Rückseite als Mischkanäle bezeichnet. Bevorzugt werden mehrere Mischermodule hintereinander angeordnet um die Mischwirkung zu verbessern. Die Öffnungsquerschnitte können eine beliebige Geometrie aufweisen. Sie können beispielsweise quadratisch oder kreisrund sein. Die Öffnungen sind vorzugsweise in einer oder mehreren Reihen über die Flankenfläche verteilt angeordnet.

Das erfindungsgemäße Mischermodul ist so in Bereiche oder Segmente aufgeteilt, daß seine Ausdehnung in Strömungsrichtung des Mischgutes gesehen in den verschiedenen Bereichen oder den Segmenten unterschiedlich lang ist. Dies bedeutet, daß der Abstand der Ebenen der Vorderseite und der Ebenen der Rückseite des Mischers in den verschiedenen Bereichen oder Segmenten unterschiedlich groß ist.

Das Verhältnis von axialer Länge, die Länge des Mischers in Strömungsrichtung, zum Durchmesser ist bei dem erfindungsgemäßen statischen Mischermodul vorzugsweise kleiner als 1, bevorzugt kleiner als 0,75, besonders bevorzugt kleiner als 0,25.

Der Abstand der äußeren Begrenzung der Vorderseite und der Rückseite des Mischermodules wird hier als axiale Länge des Moduls bezeichnet.

Die Kanäle auf Vorder- und Rückseite können unabhängig voneinander eine beliebige Form aufweisen. In einer bevorzugten Form des Mischermoduls weisen die Kanäle ein V-, U-, rechteck- oder trapezförmiges Querschnittsprofil auf.

Die Kanäle weisen auf Vorder- und Rückseite unabhängig voneinander in einer bevorzugten Form, insbesondere bei einer Ausführung mit V-, U-, rechteck- oder trapezförmigem Profil der Kanäle, gerade Flanken auf, die in einem Winkel α von 5 Grad bis 85 Grad zur Scheibenebene der Vorderseite bzw. zur Scheibenebene der Rückseite des Mischermoduls stehen.

Unter Scheibenebene wird hierbei die geometrische Ebene verstanden, die die dem anströmenden Mischgut zugewandte äußere Begrenzung der Vorderseite bzw. die abgewandte äußere Begrenzung der Rückseite bildet.

In einer Variante des statischen Mischermoduls, insbesondere bei einer Ausführung mit V-, U-, rechteck- oder trapezförmigem Profil der Kanäle, sind die Flanken der Kanäle auf der Vorder- und/oder Rückseite des Moduls gerade und stehen in einem Winkel α kleiner als 15 Grad zur Scheibenebene der Vorderseite und/oder seiner Rückseite, wobei das Mischermodul zusätzliche Abstandskonturen, insbesondere Noppen, Zähne oder Warzen auf seiner Vorderseite und/oder seiner Rückseite aufweist. Bei einer Neigung bis zu 15 Grad werden deshalb zusätzliche Abstandskonturen, z.B. Noppen, Zähne oder Warzen auf der Vorderseite bzw. der Rückseite des Mischers angebracht, damit auch in diesem Fall noch ausreichend große Hohlräume für eine Mischung des Mischgutstromes zwischen z.B. zwei aufeinanderfolgenden gleichartigen Mischermodulen zur Verfügung stehen.

Die Öffnungen in den Flanken des Mischermoduls sind gewöhnlich so angebracht, daß ihre Mittelachse oder ihre Wandung etwa senkrecht zur Ebene der Flanken der Kanäle steht. Die Mittelachse oder die Wandung der Öffnungen in den Flanken bzw. der Kanäle kann aber auch bevorzugt einen Winkel β von ±30 Grad zur Flankenebene bilden.

Je nach Strömungsprofil des Mischgutes, das das Mischermodul anströmt, kann es von Vorteil sein, über den Strömungsquerschnitt gesehen eine unterschiedliche Mischwirkung oder -intensität im Randbereich oder im Innenbereich des Strömungsquerschnitts zu erzielen. Hierzu wird das Mischermodul vorzugsweise in zwei oder mehrere Bereiche oder Segmente aufgeteilt, die unterschiedlich angeordnete und/oder unterschiedlich strukturierte Kanäle auf der Vorder- und/oder Rückseite des Mischermodules aufweisen können.

Unterschiedliche Strukturierung heißt, daß sich die Strukturen der Bereiche oder Segmente in der Art des Profils der Kanäle, im Flankenwinkel α, im Verlauf der Kanäle (gerade, parallel, konzentrisch) und/oder in der Anordnung, den Abständen und den Querschnittsflächen der Öffnungen in den Flanken unterscheiden. Segmente sind hier als getrennt gefertigte Teilstücke des Moduls zu verstehen.

In einer bevorzugten Ausführung z.B. zum Einbau in runde Rohrleitungen sind die Grenzen der Bereiche oder Segmente konzentrisch um den Mittelpunkt des Mischermoduls angeordnet.

Bevorzugt weist das Mischermodul auf seiner Vorderseite Prallflächen in der Scheibenebene auf, insbesondere Abflachungen oder flächige Erhebungen zwischen den Kanälen, deren Oberfläche senkrecht zur Strömungsrichtung des Mischgutes steht.

Das statische Mischermodul kann aus beliebigen Werkstoffen, wie Metall, Kunststoff, Keramik oder Glas gefertigt werden. Bevorzugte Werkstoffe sind legierter Stahl, Nichteisen-Metall, thermoplastischer Kunstoff, Glas, Keramik oder katalytisch wirkende Materialien. Das Mischermodul kann auch mit einem katalytisch wirkenden Material beschichtet sein.

Insbesondere bei der Mischung hochviskoser Fluide hat es sich als besonders vorteilhaft erwiesen, mehr als ein statisches Mischermodul im Strömungsweg des Mischgutes anzuordnen, um ein gutes Mischergebnis zu erreichen. Die Mischeranordnung besteht dann aus wenigstens zwei hintereinander angeordneten erfindungsgemäßen, statischen Mischermodulen oder der Kombination von mindestens einem erfindungsgemäßen statischen Mischermodul und einem herkömmlichen statischen Mischer.

Weiterer Gegenstand der Erfindung ist daher auch eine Mischeranordnung bestehend aus wenigstens zwei hintereinander angeordneten statischen Mischerelementen, wobei mindestens ein Mischerelement ein scheibenförmiges erfindungsgemäßes, statisches Mischermodul ist.

In einer bevorzugten Mischeranordnung sind mindestens zwei erfindungsgemäße, scheibenförmige, statische Mischermodule direkt hintereinander angeordnet.

Als besonders vorteilhaft hinsichtlich der Mischwirkung hat es sich erwiesen, eine Mischeranordnung zu wählen, bei der die hintereinander angeordneten, scheibenförmigen, statischen Mischermodule so positioniert sind, daß die Mischkanäle des ersten Mischermoduls gegen die Eintrittskanäle des nachfolgenden Mischermoduls versetzt oder verdreht angeordnet sind.

Eine bevorzugte Mischeranordnung ist dadurch gekennzeichnet, daß die benachbarten scheibenförmigen statischen Mischermodule auf ihrer Vorder- und/oder Rückseite parallele Scharen von geraden Kanälen aufweisen und die einander zugewandten Kanäle der benachbarten Mischermodule um einen Winkel γ von 5 Grad bis 175 Grad gegeneinander verdreht sind. Die Verdrehung verhindert, daß sich bevorzugte Strömungskanäle bilden, die bei hochviskosem Mischgut eine Gleichverteilung des Mischgutes über den Strömungsquerschnitt behindern.

Besondere Eigenschaften erhält man von Mischeranordnungen, die so aufgebaut sind, daß sich an mindestens ein erfindungsgemäßes statisches Mischermodul mit Bereichen oder Segmenten direkt ein statisches Mischerelement anschließt, das ein herkömmlicher Statikmischer oder ein erfindungsgemäßes scheibenförmiges statisches Mischermodul ist, dessen äußere oder innere Kontur den Grenzen der Bereiche oder Segmente angepaßt ist, und der in die Bereiche oder Segmente des scheibenförmigen, statischen Mischermoduls eingreift, die einen kleineren Abstand der Scheibenebene der Vorderseite und der Scheibenebene der Rückseite aufweisen, als die übrigen Bereiche oder Segmente.

Die Aufeinanderfolge des Statikmischers und des in Bereiche oder Segmente aufgeteilten, scheibenförmigen, statischen Mischermoduls ist dabei beliebig.

Eine besonders bevorzugte Ausführung des vorgenannten Mischers ist so ausgebildet, daß der eingreifende Statikmischer mit dem Ende bzw. mit dem Anfang des aufgeteilten Mischermoduls abschließt. Das heißt, daß die Einheit aus scheibenförmigem, statischem Mischermodul und eingreifendem Statikmischer so ausgeführt ist, daß der eingreifende Statikmischer mit der Scheibenebene der Vorderseite oder der Scheibenebene der Rückseite der Segmente oder Bereiche abschließt, die einen maximalen Abstand zu den Ebenen der Vorderseite bzw. der Rückseite aufweist.

Weiterer Gegenstand der Erfindung ist ein Mischer, bestehend wenigstens aus zwei erfindungsgemäßen, statischen Mischermodulen oder wenigstens einer erfindungsgemäßen Mischeranordnung bei dem das Mischermodul bzw. die Mischeranordnung in ein von Mischgut durchströmtes Rohr so eingebaut ist, daß die Vorderseite eines Mischermoduls bzw. des Mischermoduls aus der Mischeranordnung entgegen der Strömungsrichtung des Mischgutes zeigt.

Die erfindungsgemäßen Mischermodule bzw. die aus ihnen aufgebauten Mischeranordnungen ermöglichen eine kleine und kompakte Bauweise eines Statikmischers, der besser in Produktionsanlagen eingebunden werden kann, als die Mischer des Standes der Technik. Aufgrund der kürzeren Mischstrecke ist auch die Produktverweilzeit in der Mischstrecke niedriger, was sich positiv auf die Produktqualität auswirkt.

Kürzere Mischstrecken können zu niedrigeren Druckverlusten führen. Die Störanfälligkeit der Mischermodule bzw. der erfindungsgemäßen Mischer, insbesondere ihre Druckempfindlichkeit ist deutlich reduziert, da für den Aufbau der Mischermodule keine Verbindungsschweißungen oder Ähnliches nötig sind. Die einzelnen Mischermodule können aus einem Teil gefertigt werden, z.B. durch Gieß- oder Umformtechnik. Die Module können zur einfacheren Montage in gewünschten Montageeinheiten mit Montagestangen mit entsprechender Länge oder mit Montagedrähten zusammengefaßt werden, die durch zusätzliche Bohrungen zugeführt sind. Eine Vereinfachung der Montage ist z.B. durch Schweißen oder einfaches Aufreihen von Mischermodulen mit einer feinen axialen Bohrung auf einen Montagedraht und Fixieren des Drahtes möglich.

Im Falle einer Demontage der Mischer wird eine Beschädigung einzelner Module dadurch vermieden, daß diese gegenüber einem einwirkenden Preßstempel zum Austreiben der Mischer aus einer Rohrleitung bruchstabiler sind. Die Montage und auch die Remontage des Mischers ist sehr einfach, da eine exakte Positionierung und Verdrehung der Module zueinander nicht nötig ist, um ein bestimmtes Mischergebnis zu erzielen. Eine beliebige Verdrehung mehrerer statischer Mischermodule in einem Mischer verhindert bevorzugte Strömungskanäle und führt zu einem guten Mischergebnis. Ein besonderer Vorteil der erfindungsgemäßen statischen Mischermodule ist die problemlose Vergrößerung der Mischermodule bei steigendem hydraulischem Durchmesser des Strömungskanals. Unter Beibehaltung der Strukturierung der Vorder- und Rückseite der Module wird die gleiche Strukturierung nur auf einer größeren Fläche fortgesetzt. Die Zahl der Öffnungen pro Fläche und somit die lokalen Mischverhältnisse an jedem Punkt des Querschnitts des Einströmkanals bleiben gleich.

Die erfindungsgemäßen statischen Mischeranordnungen können flexibel, schnell und preiswert auf die unterschiedlichsten Mischaufgaben angepaßt werden. Einerseits können vorgegebene Mischer beliebig miteinander kombiniert werden. Andererseits können die einzelnen Module ohne großen Aufwand entsprechend den Anforderungen strukturiert werden, so daß unterschiedliche Druckgradienten und Geschwindigkeiten des strömenden Mischgutes an verschiedenen Modulen erzeugt werden können. Die Anzahl der erzeugten Teilströme kann in weiten Grenzen beliebig eingestellt werden. Diese Parameter können an die Verhältnisse im Mischgut bezüglich Viskosität, Volumenverhältnissen der zu mischenden Produktströme und deren Strömungsdurchmesser angepaßt werden, um ein optimales Mischergebnis zu erbringen.

Die erfindungsgemäßen Mischermodule bzw. Mischeranordnungen können für die Flüssig-Flüssig-Mischung von Farbstoffen bzw. Additiven in Polymerschmelzen zur Vermischung von Komponenten von gleicher oder unterschiedlicher Viskosität eingesetzt werden. Sie können auch für das Vermischen von flüssigen und gasförmigen Stoffströmen verwendet werden, wobei z.B. die gasförmige Komponente ein Schleppmittel für das Entfernen unerwünschter flüchtiger Nebenkomponenten sein kann. Bei Verwendung von Modulen oder Mischeranordnungen mit katalytisch wirkenden Oberflächen können große Reaktionsflächen für die heterogene Katalyse bereitgestellt werden. Im Falle von beheizten Rohrleitungen kann der Wärmeübergang von den in der Rohrleitung befindlichen Modulen bzw. Mischeranordnungen auf das Mischgut, insbesondere bei hochviskosen Stoffen, verbessert werden, wenn ein äußerer geschlossener Ring an den Statikmischer angebracht wird, der eine einfache Anpassung durch einen kleinen definierten Spalt an das Rohrinnere ermöglicht.

Die erfindungsgemäßen Mischermodule bzw. Mischeranordnungen sind ebenso zum Zerkleinern von Feststoffagglomeraten in einer Flüssigphase geeignet. Die erfindungsgemäßen Statikmischer können als Packungen in Trennkolonnen eingesetzt werden und den thermischen Stofftrennprozeß fördern. Die Statikmischermodule können auch in Mikrostrukturtechnik hergestellt und für Anwendungen im Bereich der Mikrostrukturtechnik zum Einsatz kommen.

Die Erfindung wird nachstehend anhand der Figuren beispielhaft näher erläutert. Es zeigen:
- Fig. 1a-c: Aufsicht und Querschnitte eines statischen Mischermoduls
- Fig. 2: Querschnitt eines statischen Mischermoduls mit flachen Flanken und Abstandsnoppen, Warzen und Zähnen.
- Fig. 3a-c: Aufsicht auf erfindungsgemäße statische Mischermodule mit verschiedenen äußeren Konturen, die in mehrere Bereiche oder Segmente mit unterschiedlicher Strukturierung eingeteilt sind.
- Fig. 4a,b: Erfindungsgemäße Mischer mit unterschiedlichen Dicken in verschiedenen Bereichen/Segmenten.
- Fig. 5a-d: Erfindungsgemäßer Mischer aus vier Mischermodulen.
- Fig, 6a: zeigt einen Ausschnitt eines Mischermodules mit geraden Kanälen und abgeflachten Vorderkanten.
- Fig. 6b: zeigt eine Fig. 6a vergleichbare Bauweise mit Rippen auf Vorder- und Rückseite.

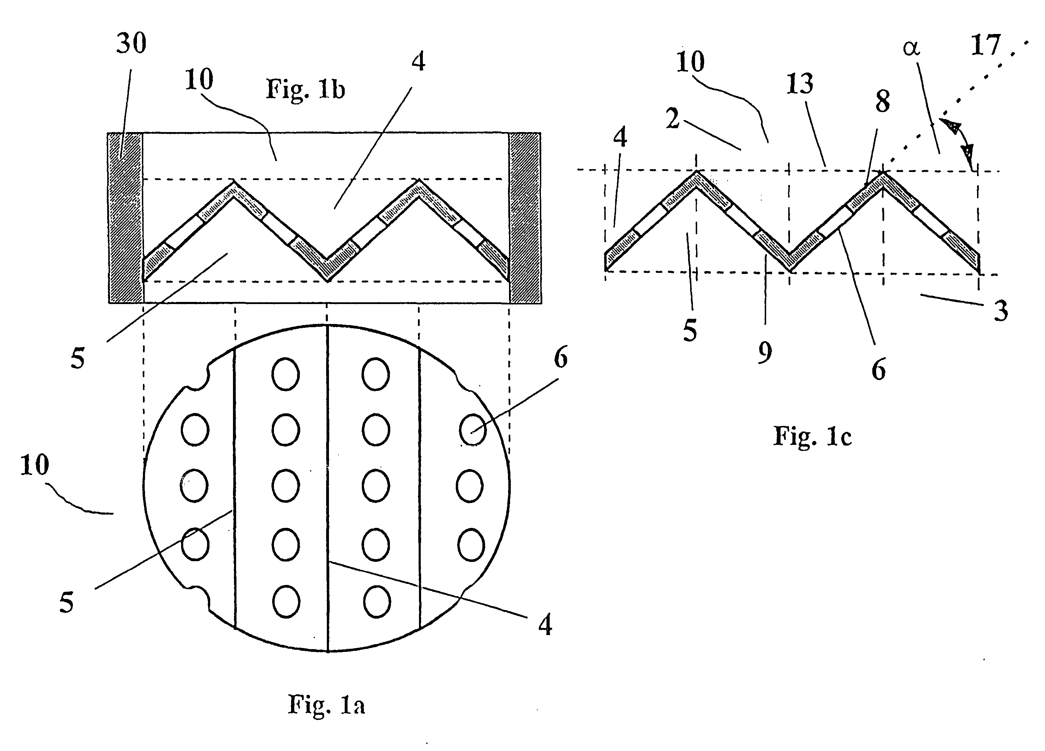

Fig. 1a zeigt die Aufsicht auf ein statisches Mischermodul 10 zum Einbau in ein Rohr 30 mit kreisförmiger Querschnittsfläche. Die Kanäle 4,5 verlaufen parallel. Die runden Öffnungen 6 sind in regelmäßigen Abständen angeordnet. Fig. 1b zeigt das Mischermodul 10 im Querschnitt wie es in ein Rohr 30 eingebaut ist. Der Querschnitt des statischen Mischermoduls in Fig. 1c zeigt ein V-förmiges Profil der Kanäle 4, 5. In den Flanken 8 der Eintrittskanäle 4 auf der Vorderseite 2 und in den Flanken 9 der Mischkanäle 5 auf der Rückseite 3 des Mischermoduls 10 befinden sich die Öffnungen 6. α bezeichnet den Winkel zwischen der Scheibenebene 13 und der Flankenebene 17.

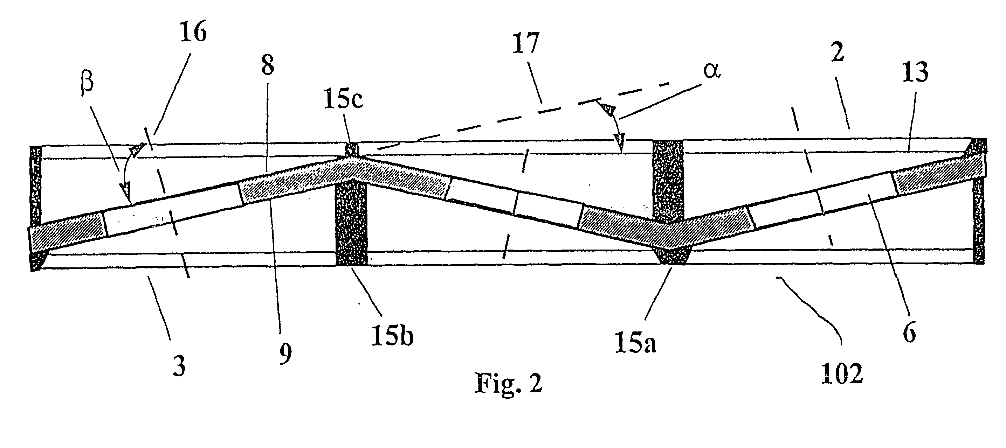

Fig. 2 zeigt den Querschnitt eines statischen Mischermoduls, bei dem die Flanken 8 der Eintrittskanäle auf der Vorderseite 2 und die Flanken 9 der Mischkanäle 5 auf der Rückseite 3 gerade und parallel zueinander sind. Die Flankenebene 17 liegt unter einem Winkel α kleiner als 15 Grad zur Scheibenebene 13. Das Mischermodul weist zusätzlich Noppen 15a, Zähne 15b und Warzen 15c als Abstandskonturen auf der Vorderseite 2 und der Rückseite 3 auf. Die Mittelachse 16 der Öffnungen 6 steht unter dem Winkel β = 90° zur Flankenebene 17.

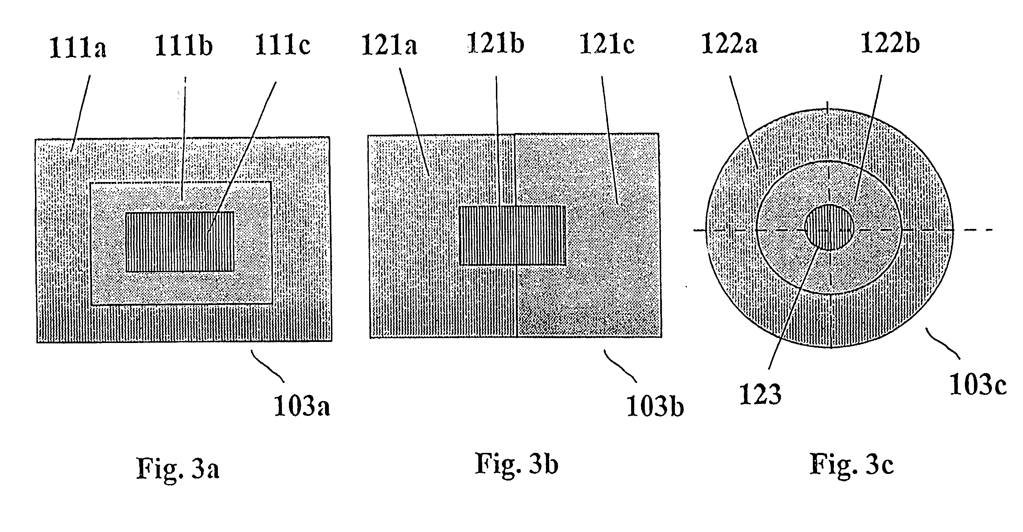

Die Fig. 3a-c zeigen eine Aufsicht auf verschiedene statische Mischermodule 103a-c in schematischer Darstellung. Das Mischermodul 103a in Fig. 3a hat eine rechteckige Grundfläche. Es ist in drei ineinanderliegende Bereiche 111a, 111b, 111c aufgeteilt, die jeweils unterschiedlich strukturiert sind. Das Mischermodul 103b in Fig. 3b hat ebenfalls eine rechteckige Grundfläche und ist aus den beiden Segmenten 121a, 121c und einem Mittelsegment 121b zusammengesetzt. Alle drei Segmente 121a-c sind unterschiedlich strukturiert. Das Mischermodul 103c in Fig. 3c hat eine kreisförmige Grundfläche. Es ist zusammengesetzt aus zwei ineinanderliegenden konzentrischen Mischermodul-Segmenten 122a, 122b mit unterschiedlicher Strukturierung und einem Statikmischer 123 konventioneller Bauart in der Mitte.

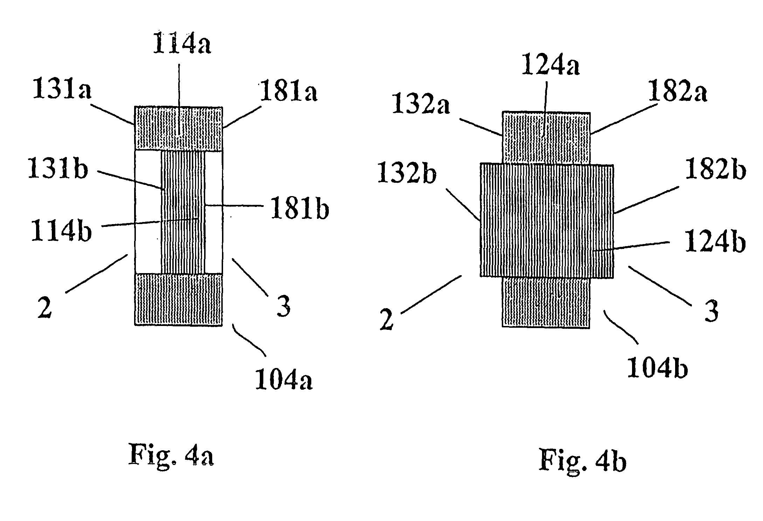

Fig. 4a zeigt vereinfacht ein statisches Mischermodul 104a, das in zwei um seinen Mittelpunkt konzentrische Bereiche 114a, 114b eingeteilt ist und bei dem der Abstand der Ebene 131a der Vorderseite 2 und der Ebene 181a der Rückseite 3 des Mischermoduls größer ist als der Abstand der Ebene 131b der Vorderseite 2 und der Ebene 181b der Rückseite 3.

Fig. 4b zeigt ein statisches Mischermodul 104b, das in zwei um seinen Mittelpunkt konzentrische Segmente 124a, 124b aufgeteilt ist und bei dem der Abstand der Ebene 132a der Vorderseite 2 und der Ebene 182a der Rückseite 3 des Mischermoduls kleiner ist als der Abstand der Ebene 132b der Vorderseite 2 und der Ebene 182b der Rückseite 3.

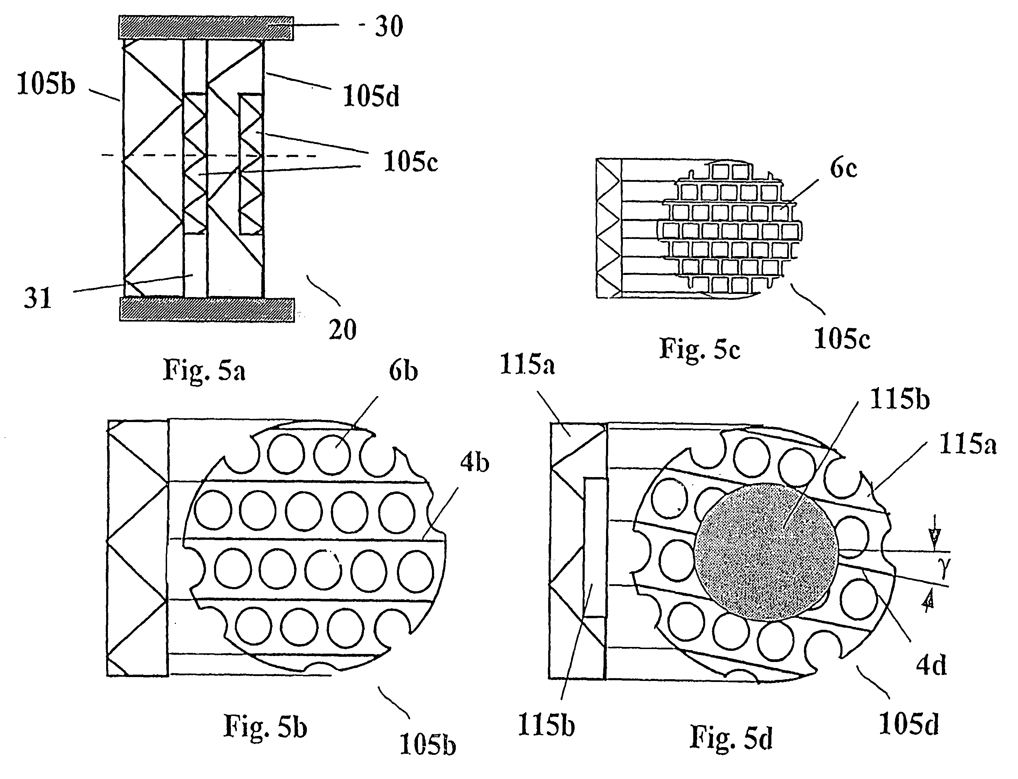

Fig. 5a zeigt eine Seitenansicht einer Mischeranordnung 20, die in ein Rohr 30 eingebaut ist, bestehend aus vier Mischermodulen 105b, 105c, 105d, 105c. In den Fig. 5b-d sind die drei verschiedenen Mischermodule, die in der Mischeranordnung 20 eingesetzt werden, in Aufsicht und im Querschnitt dargestellt, wobei die Kanäle des Querschnitt-Profils mit schmalen Hilfslinien den entsprechenden Kanälen in der Aufsicht zugeordnet sind. In Fig. 5b ist das statische Mischermodul 105b abgebildet. Es hat ein dem Durchmesser von Rohr 30 entsprechenden Außendurchmesser und runde Öffnungen 6b. Fig. 5c zeigt die Geometrie des Mischermoduls 105c, das in der Mischeranordnung 20 zweimal eingesetzt wird. Es hat einen kleineren Außendurchmesser als der Rohrdurchmesser und ist anders strukturiert als die Mischermodule 105b und 105d. Die Öffnungen 6c sind rechteckig. Um das Mischermodul 105c, das zwischen den Mischermodulen 105b und 105d in die Mischeranordnung 20 eingebaut wird bildet sich ein Hohlraum 31. In Fig. 5d ist das Mischermodul 105d abgebildet. Es ist genauso strukturiert wie das Mischermodul 105b und hat denselben Außendurchmesser. Im Unterschied zu 105b ist es in einem inneren Bereich 115b weniger dick als im äußeren Bereich 115a. In diese Aussparung 115b greift bei der zusammengesetzten Mischeranordnung 20 aus Fig. 5a eines der beiden Mischermodule 105c ein. Darüber hinaus wird das Mischermodul 105d so in die Mischeranordnung 20 eingebaut, daß die Kanäle 4d um den Winkel γ gegen die Kanäle 4b des Mischermoduls 105b verdreht sind.

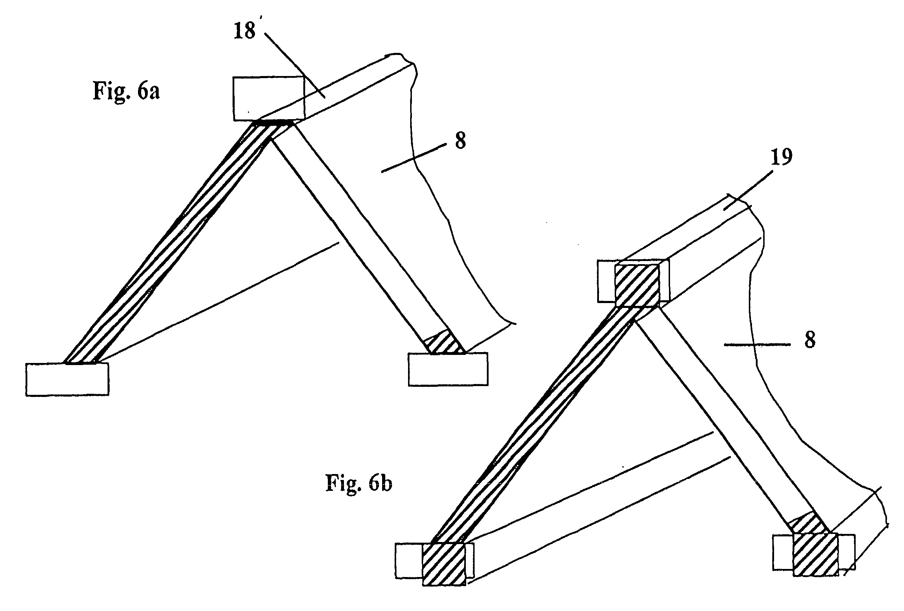

In Fig. 6a wird ein Ausschnitt aus einem Mischermodul wiedergegeben, bei dem an der Vorderseite 2 die zwischen benachbarten Eintrittskanälen befindlichen Kanten abgeflacht sind. Hierdurch wird die axiale Länge des Moduls verkleinert. Mit der Abflachung wird eine Prallfläche 18 für das ausströmende Mischgut an der Vorderseite des Moduls gebildet.

In Fig. 6b ist das Mischermodul an Vorder- und Rückseite mit zusätzlichen Rippen 19 erhöht wobei die Vorderseite der Rippen 19 eine Prallfläche für das anströmende Mischgut bildet.

### Beispiel

Zur Bewertung der Mischqualität von erfindungsgemäßen statischen Mischermodulen (SMM) nach Fig. 1a wurden Vergleichsversuche durchgeführt.

Der Außendurchmesser der bei dem Vergleichsversuch eingesetzten Mischermodule betrug 20 mm, der Flankenwinkel α 45 Grad, der Durchmesser der Öffnungen 3 mm und die Gesamtzahl der Öffnungen in jedem Modul 24,5. Es wurden 86 dieser Mischermodule hintereinander angeordnet, wobei aufeinander folgende Module mit ihren Mischkanälen jeweils um einen Winkel γ von etwa 90 Grad verdreht waren. Die Länge der Mischstrecke bestehend aus den 86 Mischermodulen betrug etwa 300 mm.

Zum Vergleich wurden ein Wendelmischer (WM); Kenicsmischer und ein Kreuz-Steg-Mischer (X-SM) für dieselbe Mischaufgabe eingesetzt.

Die Mischaufgabe bestand darin, in einem Rohr mit 20 mm Durchmesser zwei Kunststoffschmelzen (Temperatur >250°C) mit einer Viskosität von ca. 600 Pa.s zu mischen. Es handelte sich um ein sprödes thermoplastisches Polymer (Polycarbonat), dem eine elastische Polymerkomponente (Kautschukgemisch) zugemischt werden mußte, um die Geschmeidigkeit des Thermoplasten zu erhöhen. Je besser und homogener die Einmischung der elastischen Komponente in den spröden Kunststoff erfolgt, umso größer ist die Auswirkung auf die Materialeigenschaft des Kunststoffgemisches, in diesem Fall die Geschmeidigkeit.

Mit den aus den Mischversuchen resultierenden Kunststoffmischungen wurden jeweils 10 Prüfkörper gespritzt. Die Prüfkörper wurden in einer Prüfmaschine unter Normbedingungen einem Schlagzähigkeitstest nach Izod unterworfen. Dabei wurden im Fall der Verwendung des Mischers vom Typ WM alle Prüfkörper zerstört, in den beiden anderen Fällen nur einer von 10. Das heißt, der Mischer WM hat das Mischziel nicht erreicht. Die Länge des Mischer WM betrug 1000 mm, die Länge des Typs X-SM 350 mm und die Länge des statischen Mischermoduls SMM 300 mm. Der Herstellungsaufwand für die einzelnen Mischer spiegelt sich in den relativen Kosten für die Herstellung des Mischers wieder und ist für den Typ X-SM am größten. Der Unterschied rührt daher, daß der Mischer X-SM als Einzelstück geschweißt werden muß, während die Module des Mischers vom Typ SMM in einfacher Gießtechnik gefertigt werden konnten.

Die Tabelle faßt die Ergebnisse des Vergleichsversuchs zusammen. Die Mischerlängen wurden auf den Längsten der getesteten Mischer normiert (1000 mm = 100 %) und die Kosten auf den aufwendigsten und damit teuersten Mischer mit 100 % normiert.

| Mischer | Mischerlänge (%) | Mischziel | Kosten (%) |
|---|---|---|---|
| WM | 100 | nein | 30 |
| X-SM | 35 | ja | 100 |
| SMM | 30 | ja | 30 |

### Beispiel 2

Statische Mischermodule verschiedener Ausführungsformen wurden in einer Modell-Mischstrecke hinsichtlich Druckverlust und Mischgüte untersucht. Als hochviskose Versuchsflüssigkeit diente ein Polydimethylsiloxan (Silikonöl Baysilone M10.000 der Bayer AG) mit einer dynamischen Viskosität von 10 Pa·s bei Raumtemperatur. Eine Teilmenge des Silkonöls wurde mit einem anorganischen schwarzen Pigment eingefärbt. Ungefärbtes und gefärbtes Silikonöl wurden der Mischstrecke als zwei getrennte Teilströme im Mischungsverhältnis 5 zu 1 zugeführt. Der Gesamtdurchsatz betrug 9 kg/h. Nach Durchlaufen der Mischstrecke wurde das Mischgut durch eine transparente Schlitzdüse mit einem Strömungsquerschnitt von 4 mal 110 mm geführt. Die Düse wurde von einer Seite mit einer homogenen Lichtquelle ausgeleuchtet. Von der anderen Seite wurde das Mischbild mit einer Videokamera beobachtet. Das Videosignal der Kamera wurde digitalisiert und unter Verwendung einer Kalibrierfunktion zur Berechnung der lokalen Konzentration an Pigment verwendet. Diese räumliche Konzentrationsverteilung wurde statistisch hinsichtlich des Mittelwerts und der Standardabweichung ausgewertet.

In vielen praktischen Anwendungen von statischen und dynamischen Mischern wird die Mischgüte durch den sog. Variationskoeffizienten quantifiziert. Der Variationskoeffizient ist definiert als das Verhältnis aus der Standardabweichung und dem Mittelwert einer Konzentrationsverteilung. Häufig geht man davon aus, daß Mischungen als für praktische Zwecke hinreichend homogen angesehen werden können, wenn der Variationskoeffizient einen Wert von kleiner als 5 % aufweist.

Tabelle 1 enthält eine Auflistung von unterschiedlichen erfindungsgemäßen statischen Mischeranordnungen, die in der Modell-Mischstrecke untersucht wurden. Die Geometrie der einzelnen statischen Mischermodule entspricht grundsätzlich dem in den Figuren 1a bis 1c gezeigten Aufbau und wird ebenso wie ihre Anordnung und Anzahl im zusammengesetzten Mischer durch eine Reihe von Parametern speziell beschrieben, die in der Tabelle spezifiziert sind. Die Bedeutung der einzelnen geometrischen Parameter geht aus der Fig. 1 c hervor. Als Ergebnis der Mischversuche ist in Tabelle 1 die Anzahl erfindungsgemäßer statischer Mischermodule, der Druckverlust beim Durchströmen der Modell-Mischstrecke, sowie der gemessene Variationskoeffizient wiedergegeben.

Hierbei wird auch deutlich, daß eine Anordnung der Mischermodule mit statischen Verdrehungen gegenüber einer geordneten Zusammenstellung mit wenigen exakten Verdrehungen um 90° (Mittelachse) hinsichtlich der Mischaufgabe im Einzelnen ausgewählt werden kann. Die Modulbauweise des Mischers ermöglicht eine einfache und schnelle Anpassung des Mischers.

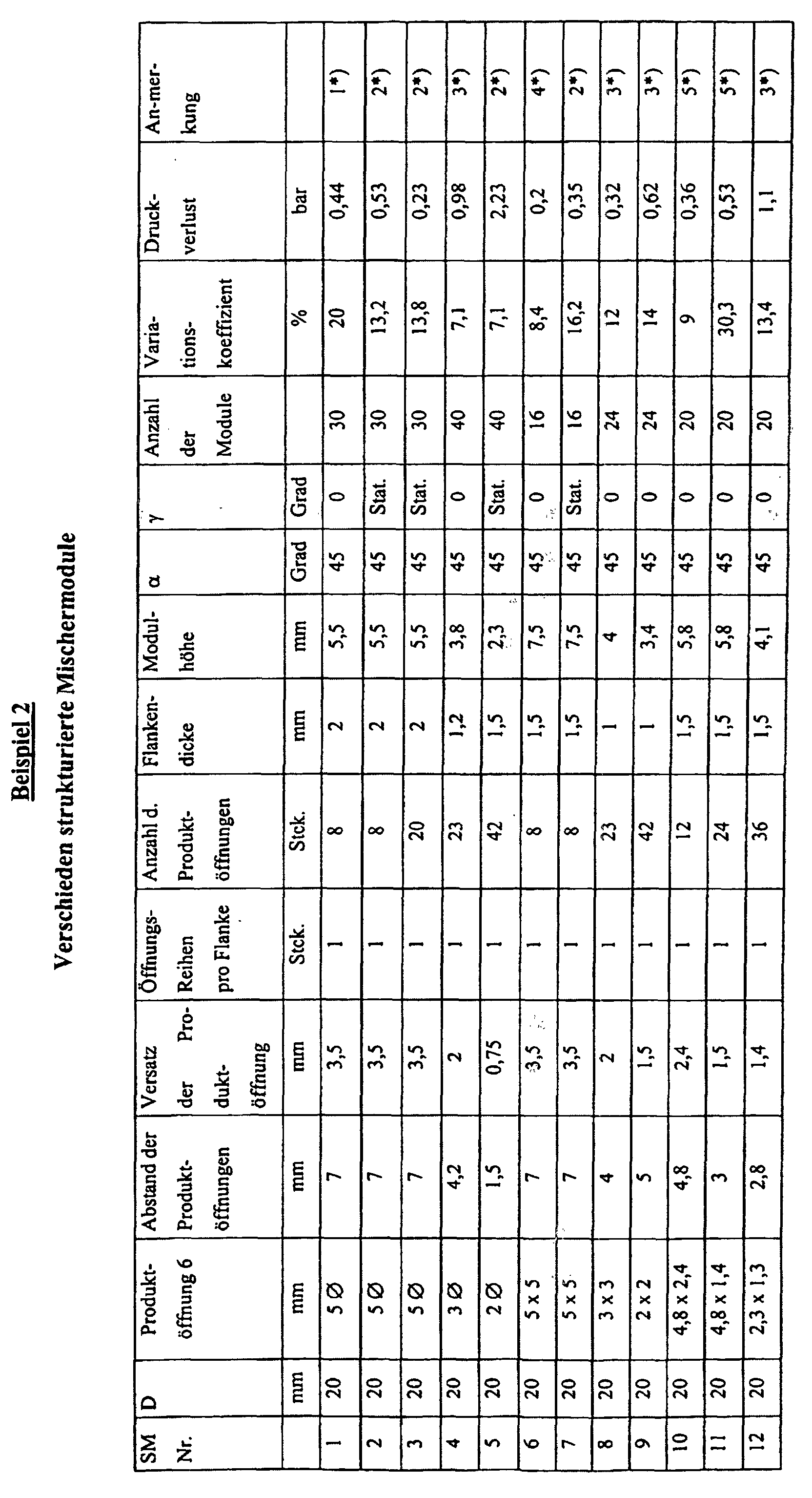

### Erläuterungen zu Tabelle 1:

D: Rohrinnendurchmesser
Produktöffnung: Produktöffnungen 6 in den Flanken 8 der Eintrittskanäle 4.
Abstand der Produktöffnungen 6: Horizontaler Abstand zwischen den benachbarten Produktöffnungen 6 auf einer Flanke 8 (Abstand der Öffnungsmittelpunkte).
Versatz der Produktöffnungen 6: Mittenversatz der Produktöffnungen von Produktöffnungsreihen, die auf gegenüberliegenden Flanken 8 angeordnet sind.
Öffnungsreihen pro Flanke: Anzahl der Produktöffnungsreihen pro Flanke.
Flankendicke: Materialstärke, axiale Länge der Produktöffnung.
Modulhöhe: In Strömungsrichtung axiale Länge des Moduls.
α: Neigungswinkel der Flanke 8.
γ: Verdrehwinkel benachbarter Mischermodule um den axialen Mittelpunkt.
Anzahl der Module: Anzahl der direkt hintereinander angeordneten Mischermodule in der Mischstrecke (Mischer).

### Anmerkung:

1*) Je 10 Mischermodule sind hierbei zu einem Paket zusammengefaßt, wobei der Verdrehwinkel γ = 90° zwischen benachbarten Modulpaketen beträgt.
2*) Statistische Anordnung benachbarter Mischermodule mit einem Verdrehwinkel γ von 5-175°.
3*) Mischer ist in Pakete mit 5 Mischermodulen aufgeteilt. Benachbarte Modulpakete sind um γ = 90° gegeneinander verdreht um den Mittelpunkt der Module.
4*) Mischer ist in 4 Pakete mit 4 Mischermodulen aufgeteilt. Benachbarte Modulpakete sind um γ = 90° gegeneinander verdreht.
5*) Mischer ist in 5 Pakete mit 4 Mischermodulen aufgeteilt. Benachbarte Modulpakete sind um γ = 90° gegeneinander verdreht.

Die Mischermodule gemäß Beispielen SM Nr. 1 und 2 weisen gegenüber den vergleichbaren Beispielen Nr. 6 und 7 außer der unterschiedlichen Geometrie der Öffnungen 6 (runde Öffnungen anstelle von quadratischen Öffnungen) noch eine weitere Besonderheit auf.

Ober- und Unterkanten sind bei Modulen entspr. Nr. 1 und 2 abgeflacht, (siehe Fig. 6a), wodurch sich eine geringere Modulhöhe ergibt. Die dabei auf der Vorderseite dem Produktstrom entgegenstehenden Prallflächen verbessern überraschenderweise den Variationskoeffizienten gegenüber baugleichen Modulen ohne Abflachung der Kanten (wie in Fig. 1b schematisch gezeigt) bei einer statistischen Verdrehung der Module (siehe im Beispiel Nr. 2).

## Patentansprüche

1. Statisches Mischermodul (10) bestehend aus einer mit einer Vielzahl von Öffnungen (6) versehenen Scheibe, und einer den äußeren Rand der Scheibe umschließenden Rohrleitung oder einem umschließenden Gehäuse, **dadurch gekennzeichnet, daß** die Scheibe auf ihrer dem Mischgut zugewandten Vorderseite (2) durch Eintrittskanäle (4) und auf ihrer Rückseite (3) durch Mischkanäle (5) strukturiert ist, wobei die Eintrittskanäle (4) und Mischkanäle (5) zueinander parallel oder konzentrisch verlaufen, daß die Öffnungen (6) in den Flanken (8) der Eintrittskanäle (4) angebracht sind und in die Flanken (9) der Mischkanäle (5) münden, daß die Eintrittskanäle (4) und/oder Mischkanäle (5) in Bezug auf einen geometrischen Querschnitt senkrecht zur Scheibenebene (13) und senkrecht zur Längsausdehnung der Eintrittskanäle (4) bzw. Mischkanäle (5) gerade Flanken aufweisen, die in einem Winkel α von 5 Grad bis 85 Grad zur Scheibenebene (13) der Vorderseite (2) und/oder der Rückseite (3) stehen, und das-die Öffnungen in einer oder mehreren Reihen über die Flankenfläche verteilt angeordnet sind, sowie daß das Mischermodul in zwei oder mehrere Bereiche oder Segmente aufgeteilt ist, die unterschiedlich angeordnete und/oder unterschiedlich strukturierte Eintrittskanäle (4) und/oder Mischkanäle (5) haben.

2. Statisches Mischermodul nach Anspruch 1, **dadurch gekennzeichnet, daß** die Flanken (8) der Eintrittskanäle (4) und/oder die Flanken (9) der Mischkanäle (5) gerade sind und in einem Winkel α kleiner als 15 Grad zur Scheibenebene (13) der Vorderseite (2) und/oder der Rückseite (3) stehen und daß das Mischermodul zusätzliche Abstandskonturen, insbesondere Noppen (15a), Zähne (15b) oder Warzen (15c) auf der Vorderseite (2) und/oder der Rückseite (3) aufweist.

3. Statisches Mischermodul nach einem der Ansprüche 1 bis 2, **dadurch gekennzeichnet, daß** die Mittelachse (16) oder die Wandung der Öffnungen (6) in den Flanken der Kanäle einen Winkel β von ±30 Grad zur Flankenebene (17) bildet.

4. Statisches Mischermodul nach einem der Ansprüche 1 bis 3, **dadurch gekennzeichnet, daß** die Eintrittskanäle (4) und/oder Mischkanäle (5) ein V-, U-, rechteck- oder trapezförmiges Querschnittsprofil aufweisen.

5. Statisches Mischermodul nach einem der Ansprüche 1 bis 4, **dadurch gekennzeichnet, daß** das Mischermodul in zwei oder mehrere Bereiche oder Segmente aufgeteilt ist, die unterschiedliche Abstände der Öffnungen zueinander und/oder eine unterschiedliche Querschnittsfläche der Öffnungen aufweisen.

6. Statisches Mischermodul nach Anspruch 4 oder 5, **dadurch gekennzeichnet, daß** die Grenzen der Bereiche oder Segmente konzentrisch um den Mittelpunkt des Mischermoduls angeordnet sind.

7. Statisches Mischermodul nach einem der Ansprüche 4 bis 6, **dadurch gekennzeichnet, daß** der Abstand der Ebenen der Vorderseite und der Ebenen der Rückseite des Mischers in den verschiedenen Bereichen oder Segmenten unterschiedlich groß ist.

8. Statisches Mischermodul nach einem der Ansprüche 1 bis 7, **dadurch gekennzeichnet, daß** das Modul auf der Vorderseite (2) Prallflächen (18, 19) in der Scheibenebene aufweist, insbesondere Abflachungen (18) oder flächige Erhebungen (19).

9. Statisches Mischermodul nach einem der Ansprüche 1 bis 8, **dadurch gekennzeichnet, daß** der Mischer aus legiertem Stahl, Nichteisen-Metall, Kunstoff, Glas, Keramik oder katalytisch wirkender Legierung besteht.

10. Mischeranordnung bestehend aus wenigstens zwei hintereinander angeordneten statischen Mischerelementen, **dadurch gekennzeichnet, daß** mindestens ein Mischerelement ein scheibenförmiges statisches Mischermodul nach einem der Ansprüche 1 bis 9 ist.

11. Mischeranordnung nach Anspruch 10, **dadurch gekennzeichnet, daß** in der Mischeranordnung mindestens zwei scheibenförmige statische Mischermodule nach einem der Ansprüche 1 bis 9 direkt hintereinander angeordnet sind

12. Mischeranordnung nach Anspruch 10, **dadurch gekennzeichnet, daß** die scheibenförmigen statischen Mischermodule so positioniert sind, daß die Mischkanäle des ersten Mischermoduls gegen die Eintrittskanäle des zweiten Mischermoduls versetzt oder verdreht angeordnet sind.

13. Mischeranordnung nach Anspruch 12, **dadurch gekennzeichnet, daß** die benachbarten scheibenförmigen statischen Mischermodule parallele Scharen von geraden Eintrittskanälen und Mischkanälen aufweisen und die einander zugewandten Mischkanäle und Eintrittskanäle der benachbarten Mischermodule um einen Winkel γ von 5 Grad bis 175 Grad gegeneinander verdreht sind.

14. Mischeranordnung nach einem der Ansprüche 10 bis 13, **dadurch gekennzeichnet, daß** die Mischeranordnung wenigstens ein scheibenförmiges statisches Mischermodul nach Anspruch 7 aufweist, wobei sich an das statische Mischermodul mit Bereichen oder Segmenten direkt ein statisches Mischerelement anschließt, das ein herkömmlicher Statikmischer oder ein scheibenförmiges statisches Mischermodul ist, dessen äußere oder innere Kontur den Grenzen der Bereiche oder Segmente angepaßt ist und das in die Bereiche oder Segmente des scheibenförmigen, statischen Mischermoduls eingreift, die einen kleineren Abstand der Scheibenebene der Vorderseite und der Scheibenebene der Rückseite aufweisen, als die übrigen Bereiche oder Segmente.

15. Mischeranordnung nach Anspruch 14, **dadurch gekennzeichnet, daß** die Einheit aus scheibenförmigem statischem Mischermodul und eingreifendem Statikmischer so ausgeführt sind, daß der eingreifende Statikmischer mit der Ebene der Vorderseite oder der Ebene der Rückseite der Segmente oder Bereichte abschließt, die einen maximalen Abstand zu den Ebenen der Vorderseite bzw. der Rückseite aufweist.

16. Mischer mit wenigstens zwei statischen Mischermodulen nach einem der Ansprüche 1 bis 9 oder einer Mischeranordnung nach einem der Ansprüche 10 bis 15, bei dem die Mischermodule oder die Mischeranordnung in ein von Mischgut durchströmtes Rohr so eingebaut ist, daß die Vorderseite eines einzelnen Mischermoduls bzw. eines Mischermoduls aus der Mischeranordnung entgegen der Strömungsrichtung des Mischgutes zeigt.

## Claims

1. Static mixer module (10) comprising a plate provided with a plurality of apertures (6), and a tubular conduit surrounding the outer edge of the plate or a surrounding housing, **characterised in that** the plate is structured on its front side (2) facing towards the material to be mixed by inlet channels (4) and on its reverse side (3) by mixing channels (5), the inlet channels (4) and mixing channels (5) being disposed parallel or concentrically to one another, **in that** the apertures (6) are formed in the flanks (8) of the inlet channels (4) and open into the flanks (9) of the mixing channels (5), **in that** the inlet channels (4) and/or the mixing channels (5) have straight flanks disposed, with respect to a geometrical cross-section, perpendicularly to the plane (13) of the plate and perpendicularly to the longitudinal extension of the inlet channels (4) or mixing channels (5), which flanks are disposed at an angle α of 5 degrees to 85 degrees to the plane (13) of the front side (2) and/or the reverse side (3) of the plate, **in that** the apertures are distributed in one or more rows over the surface of the flank, and **in that** the mixer module is divided into two or more areas or segments which have differently arranged and/or differently structured inlet channels (4) and/or mixing channels (5).

2. Static mixer module according to claim 1, **characterised in that** the flanks (8) of the inlet channels (4) and/or the flanks (9) of the mixing channels (5) are straight and are disposed at an angle α of less than 15 degrees to the plane (13) of the front side (2) and/or the reverse side (3) of the plate, and **in that** the mixer module has additional spacing contours, in particular knobs (15a), teeth (15b) or bosses (15c) on the front side (2) and/or the reverse side (3).

3. Static mixer module according to either of claims 1 and 2, **characterised in that** the centre axis (16) or the wall of the apertures (6) in the flanks of the channels forms an angle β of ± 30 degrees to the plane (17) of the flank.

4. Static mixer module according to any one of claims 1 to 3, **characterised in that** the inlet channels (4) and/or the mixing channels (5) have a V-shaped, U-shaped, rectangular or trapezoid cross-sectional profile.

5. Static mixer module according to any one of claims 1 to 4, **characterised in that** the mixer module is divided into two or more areas or segments which have different spacing between the apertures and/or a different cross-sectional area of the apertures.

6. Static mixer module according to claim 4 or 5, **characterised in that** the boundaries of the areas or segments are arranged concentrically around the centre of the mixer module.

7. Static mixer module according to any one of claims 4 to 6, **characterised in that** the distances between the planes of the front side and the planes of the reverse side of the mixer have different magnitudes in the different areas or segments.

8. Static mixer module according to any one of claims 1 to 7, **characterised in that** the module has on its front side (2) baffle faces (18, 19) in the plane of the plate, in particular flattened portions (18) or planar elevated portions (19).

9. Static mixer module according to any one of claims 1 to 8, **characterised in that** the mixer is made of alloyed steel, non-ferrous metal, plastics material, glass, ceramic material or alloy which has a catalytic effect.

10. Mixer arrangement comprising at least two static mixer elements arranged one behind the other, **characterised in that** at least one mixer element is a plate-like static mixer module according to any one of claims 1 to 9.

11. Mixer arrangement according to claim 10, **characterised in that** at least two plate-like static mixer modules according to any one of claims 1 to 9 are arranged one directly behind the other in the mixer arrangement.

12. Mixer arrangement according to claim 10, **characterised in that** the plate-like static mixer modules are so positioned that the mixing channels of the first mixer module are offset or rotated with respect to the inlet channels of the second mixer module.

13. Mixer arrangement according to claim 12, **characterised in that** the adjacent plate-like static mixer modules have parallel groups of straight inlet channels and mixing channels and the mixing channels and inlet channels of the adjacent mixer modules which face towards one another are rotated through an angle y of 5 degrees to 175 degrees with respect to one another.

14. Mixer arrangement according to any one of claims 10 to 13, **characterised in that** the mixer arrangement includes at least one plate-like static mixer module according to claim 7, there being disposed directly adjacent to the static mixer module having areas or segments a static mixer element which is a conventional static mixer or a plate-like static mixer module, the external or internal contour of which is adapted to the boundaries of the areas or segments and which engages into the areas or segments of the plate-like static mixer module, which areas or segments are at a shorter distance from the plane of the front side of the plate and from the plane of the reverse side of the plate than the other areas or segments.

15. Mixer arrangement according to claim 14, **characterised in that** the unit formed by the plate-like static mixer and the engaging static mixer is so configured that the engaging static mixer ends with the plane of the front side or the plane of the reverse side of the segments or areas which is at a maximum distance from the planes of the front side or the reverse side respectively.

16. Mixer comprising at least two static mixer modules according to any one of claims 1 to 9 or a mixer arrangement according to any one of claims 10 to 15, wherein the mixer modules or the mixer arrangement are/is so incorporated in a pipe through which material to be mixed flows that the front side of an individual mixer module or a mixer module of the mixer arrangement faces in the direction opposite to the flow direction of the material to be mixed.

## Revendications

1. Module de mélange statique (10) constitué d'une plaque dotée d'une pluralité d'ouvertures (6) et d'un conduit tubulaire qui entoure le bord extérieur de la plaque ou d'un boîtier périphérique, **caractérisé en ce que** sur son côté avant (2) tourné vers le produit à mélanger, la plaque est structurée par des canaux d'entrée (4) et sur son côté arrière (3) par les canaux de mélange (5), les canaux d'entrée (4) et les canaux de mélange (5) s'étendant parallèlement ou concentriquement les uns aux autres, **en ce que** les ouvertures (6) sont ménagées dans les flancs (8) des canaux d'entrée (4) et débouchent dans les flancs (9) des canaux de mélange (5), **en ce que** par rapport à une coupe géométrique perpendiculaire au plan (13) de la plaque et perpendiculaire à l'extension longitudinale des canaux d'entrée (4) ou des canaux de mélange (5), les canaux d'entrée (4) et/ou les canaux de mélange (5) présentent des flancs rectilignes qui forment par rapport au plan (13) du côté avant (2) et/ou du côté arrière (3) de la plaque un angle α de 5 degrés à 85 degrés et **en ce que** les ouvertures sont réparties en une ou plusieurs séries sur la surface des flancs et **en ce que** le module de mélange est divisé en deux ou plusieurs zones ou segments qui ont des canaux d'entrée (4) et/ou des canaux de mélange (5) disposés différemment et/ou structurés différemment.

2. Module de mélange statique selon la revendication 1, **caractérisé en ce que** les flancs (8) des canaux d'entrée (4) et/ou les flancs (9) des canaux de mélange (5) sont rectilignes et forment avec le plan (13) du côté avant (2) et/ou du côté arrière (3) de la plaque un angle α inférieur à 15 degrés et **en ce que** le module de mélange présente des contours d'écartement supplémentaires, en particulier des boutons (15a), des dents (15b) ou des nodules (15c) sur le côté avant (2) et/ou sur le côté arrière (3).

3. Module de mélange statique selon l'une des revendications 1 à 2, **caractérisé en ce que** l'axe central (16) ou la paroi des ouvertures (6) ménagées dans les flancs des canaux forment un angle β de ± 30 degrés par rapport au plan (17) des flancs.

4. Module de mélange statique selon l'une des revendications 1 à 3, **caractérisé en ce que** les canaux d'entrée (4) et/ou les canaux de mélange (5) ont une section transversale profilée en V, en U, en rectangle ou en trapèze.

5. Module de Mélange statique selon l'une des revendications 1 à 4, **caractérisé en ce que** le module de mélange est divisé en deux ou plusieurs zones ou segments qui présentent différents intervalles entre les ouvertures et/ou des ouvertures dont les sections transversales ont des surfaces différentes.

6. Module de mélange statique selon les revendications 4 ou 5, **caractérisé en ce que** les frontières des zones ou segments sont disposées concentriquement autour du centre du module de mélange.

7. Module de mélange statique selon l'une des revendications 4 à 6, **caractérisé en ce que** la distance entre le plan du côté avant et le plan du côté arrière du mélangeur diffère dans les différentes zones ou segments.

8. Module de mélange statique selon l'une des revendications 1 à 7, **caractérisé en ce que** le module présente sur le côté avant (2) des surfaces d'incidence (18, 19) situées dans le plan de la plaque, et en particulier des aplatissements (18) ou des reliefs aplatis (19).

9. Module de mélange statique selon l'une des revendications 1 à 8, **caractérisé en ce que** le mélangeur est constitué d'acier allié, de métal non ferreux, de matière synthétique, de verre, de céramique ou d'un alliage à action catalytique.

10. Agencement de mélangeur constitué d'au moins deux éléments de mélange statique disposés l'un derrière l'autre, **caractérisé en ce qu'**au moins un élément de mélange est un module de mélange statique en forme de plaque selon l'une des revendications 1 à 9.

11. Agencement de mélangeur selon la revendication 10, **caractérisé en ce qu'**au moins deux modules de mélange statiques en forme de plaque selon l'une des revendications 1 à 9 sont disposés directement l'un derrière l'autre dans l'agencement de mélangeur.

12. Agencement de mélangeur selon la revendication 10, **caractérisé en ce que** les modules de mélange statiques en forme de plaque sont disposés de telle sorte que les canaux de mélange du premier module de mélange soient décalés ou tournés par rapport aux canaux d'entrée du deuxième mélangeur.

13. Agencement de mélangeur selon la revendication 12, **caractérisé en ce que** les modules de mélange statiques en forme de plaque voisins présentent des séries parallèles de canaux d'entrée et de canaux de mélange rectilignes, les canaux de mélange et les canaux d'entrée tournés l'un vers l'autre des modules de mélange voisins étant tournés l'un par rapport à l'autre d'un angle γ compris entre 5 degrés et 175 degrés.

14. Agencement de mélangeur selon l'une des revendications 10 à 13, **caractérisé en ce que** l'agencement de mélangeur présente au moins un module de mélange statique en forme de plaque selon la revendication 7, un élément de mélange statique se raccordant directement au module de mélange statique par des zones ou segments et étant un mélangeur statique habituel ou un module de mélange statique en forme de plaque dont le contour extérieur ou le contour intérieur est adapté aux frontières des zones ou segments et s'engageant dans des zones ou segments du module de mélange statique en forme de plaque qui présentent un plus petit écart entre le plan du côté avant et le plan du côté arrière de la plaque que les autres zones ou segments.

15. Agencement de mélangeur selon la revendication 15, **caractérisé en ce que** l'entité constituée d'un module de mélange statique en forme de plaque et d'un mélangeur statique qui s'y engage est réalisée de telle sorte que le mélangeur statique engagé se raccorde au plan du côté avant ou au plan du côté arrière des segments ou des zones qui présentent une distance maximale par rapport au plan du côté avant ou du côté arrière.

16. Mélangeur comportant au moins deux modules de mélange statiques selon l'une des revendications 1 à 9 ou un agencement de mélangeur selon l'une des revendications 10 à 15, dans lequel le module de mélange ou l'agencement de mélangeur est monté dans un tube traversé par un écoulement de produit à mélanger, de telle sorte que le côté avant d'un module de mélange individuel en forme de plaque ou d'un module de mélange de l'agencement de mélangeur soit opposé à la direction d'écoulement du produit de mélange.
